# FASCICULE DE BREVET EUROPEEN

(11) **EP 4 046 863 B1**
(45) Date de publication et mention de la délivrance du brevet: **15.05.2024**
(21) Numéro de dépôt: 22156636.7
(22) Date de dépôt: 14.02.2022
(51) Int. Cl.: B60N 2/00, B60R 21/015, B60N 2/90

(54) **PROCÉDÉ DE DÉTECTION D'UNE ROTATION D'UNE PARTIE DU TRONC D'UN OCCUPANT ASSIS SUR UN SIÈGE**
VERFAHREN ZUM ERKENNEN EINER DREHUNG EINES TEILS DES RUMPFES EINES INSASSEN, DER AUF EINEM SITZ SITZT
METHOD FOR DETECTING A ROTATION OF A PORTION OF THE TRUNK OF AN OCCUPANT SITTING ON A SEAT

(30) Priorité: 23.02.2021 FR 2101745
(43) Date de publication de la demande: 24.08.2022
(73) Titulaire: FAURECIA Sièges d'Automobile, 92000 Nanterre (FR)
(72) Inventeur: BAUDU, Samuel, 92100 BOULOGNE BILLANCOURT (FR); BALDE, Mamadou, 91150 MORIGNY-CHAMPIGNY (FR); LE ROUX, Stéphane, 91510 LARDY (FR); ROUCHOU, Mohamed, 91260 JUVISY SUR ORGES (FR)
(74) Mandataire: Plasseraud IP

(56) Documents cités:
- EP-A2- 1 129 893
- DE-A1-102008 044 903

## Description

### Domaine technique de l'invention

L'invention concerne un procédé de détection d'une rotation d'une partie du tronc d'un occupant assis sur un siège, par exemple un siège d'un véhicule automobile. Ce procédé est mis en oeuvre pour surveiller la posture assise d'un occupant et prévenir d'éventuelles futures douleurs lombaires.

### Etat de la technique antérieure

Il existe une demande croissante de procédés de surveillance et de détection de posture assise inadaptée pouvant à terme entrainer des douleurs lombaires. Ces procédés sont particulièrement demandés dans le domaine automobile. Lors de long trajet en voiture, les conducteurs ont souvent tendance à s'affaisser sur leur siège ou à courber le thorax en raison d'une fatigue ou d'une perte de tonicité musculaire. Ces postures ne sont pas ergonomiques et peuvent générer des douleurs lombaires. Des procédés de détection de mauvaises postures ont déjà ont été développées pour remédier à ce problème. Toutefois, ces procédés de sont pas très robustes ni très fiables.

Le document DE 10 2008 044 903 A1 décrit un procédé de détection d'une rotation d'au moins une partie du tronc d'un occupant assis sur un siège d'un véhicule, par exemple un véhicule automobile, le procédé étant mis en oeuvre par un système de détection comprenant un siège, pour générer un signal de détection et le document EP 1 129 893 A2 décrit un procédé de détection pour un siège d'un véhicule avec au moins deux capteurs capacitifs.

### Présentation de l'invention

L'invention a pour but de proposer un procédé de détection alternatif plus robuste et plus fiable. Avantageusement, ce procédé est peu onéreux.

### Résumé de l'invention

La présente invention a pour objet un procédé de détection d'une rotation d'au moins une partie du tronc d'un occupant assis sur un siège d'un véhicule, par exemple un véhicule automobile, le procédé étant mis en oeuvre par un système de détection comprenant un siège, au moins deux capteurs capacitifs interdigités portés par le siège, et un contrôleur connecté aux capteurs capacitifs interdigités, ledit contrôleur comprenant une mémoire contenant au moins une plage de variation de valeurs capacitives définie pour au moins un capteur capacitif interdigité ; le procédé comportant une étape de déclenchement d'une phase de mesure comportant des périodes au cours desquelles des valeurs capacitives sont mesurées par les capteurs capacitifs ; le procédé comportant en outre les étapes suivantes mises en oeuvre par le contrôleur au cours de la phase de mesure :
- déterminer à partir des valeurs capacitives mesurées, successivement, une première posture stationnaire de l'occupant au cours d'une première période stationnaire, un mouvement d'au moins une partie du tronc de l'occupant, et une deuxième posture stationnaire de l'occupant au cours d'une deuxième période stationnaire,
- calculer pour chaque capteur capacitif, la variation entre une valeur représentative des valeurs capacitives mesurées au cours de la première période stationnaire et une valeur représentative des valeurs capacitives mesurées au cours de la deuxième période stationnaire,
- si la variation calculée pour lesdits au moins deux capteurs capacitifs, est comprise dans lesdites plages de valeurs capacitives définies pour lesdits capteurs capacitifs, générer un signal de détection.

Les caractéristiques exposées dans les paragraphes suivants peuvent, optionnellement, être mises en oeuvre. Elles peuvent être mises en oeuvre indépendamment les unes des autres ou en combinaison les unes avec les autres : la valeur représentative des valeurs capacitives mesurées est la valeur moyenne des valeurs capacitives mesurées.

Selon un mode de réalisation, l'étape de détermination d'une posture stationnaire comporte les étapes suivantes :
- pour chaque capteur capacitif, calculer un seuil maximal et un seuil minimal à partir des valeurs capacitives mesurées au cours d'une période précédente,
- pour chaque capteur capacitif, comparer les valeurs capacitives mesurées au cours d'une période suivante au seuil maximal et au seuil minimal; si lesdites valeurs capacitives sont comprises entre le seuil maximal et le seuil minimal pour l'ensemble des capteurs capacitifs, pendant une durée supérieure à une seconde et demi alors une posture stationnaire est déterminée.

Selon un mode de réalisation, l'étape de détermination comporte une étape de calcul de la moyenne des valeurs capacitives mesurées au cours de la période précédente pour chaque capteur capacitif ; le seuil maximal et/ou le seuil minimal étant calculée par ajout et/ou retranchement d'au moins 2500 pico Farads, et de préférence de 3 000 pico Farads, à la valeur moyenne calculée à partir des valeurs capacitives mesurées au cours de la période précédente.

Selon un mode de réalisation, la deuxième période stationnaire a lieu au moins deux minutes, et de préférence trois minutes, après la première période stationnaire. Selon un mode de réalisation, le siège comporte un dossier s'étendant selon une direction longitudinale et selon une direction transversale, et une assise ayant une partie arrière adjacente au dossier ; un premier capteur capacitif étant positionné sur une zone centrale selon la direction transversale du dossier, un deuxième capteur capacitif étant positionné sur une zone latérale de la partie arrière de l'assise, et dans lequel si la variation calculée pour le premier capteur capacitif est supérieure à 7500 pico Farads, et si la variation calculée pour le deuxième capteur capacitif, est supérieure à 7500 pico Farads, le signal de détection est représentatif d'une rotation du bassin de l'occupant.

Selon un mode de réalisation, le siège comporte un dossier s'étendant selon une direction longitudinale et selon une direction transversale et une assise ayant une partie arrière adjacente au dossier, un premier capteur capacitif étant positionné sur une zone inférieure latérale du dossier, un deuxième capteur capacitif étant positionné sur une zone centrale selon la direction transversale du dossier, un troisième capteur capacitif étant positionné sur une zone latérale de la partie arrière de l'assise, et dans lequel si la variation calculée pour le premier capteur capacitif est supérieure à 4500 pico Farads ou est comprise entre -3000 pico Farads et +3000 pico Farads, si la variation calculée pour le deuxième capteur capacitif est supérieure à 7500 pico Farads, et si la variation calculée pour le troisième capteur capacitif est comprise entre -3000 pico Farads et +3000 pico Farads, le signal de détection est représentatif d'une rotation du bassin de l'occupant.

Selon un mode de réalisation, le signal de détection est généré uniquement si les valeurs capacitives mesurées au cours de la deuxième période stationnaire sont comprises entre le seuil maximal et le seuil minimal pendant une durée d'au moins dix secondes.

Selon un mode de réalisation, le siège comporte un dossier et une assise ayant une partie arrière adjacente au dossier et une partie avant, un premier capteur capacitif étant positionné sur une zone inférieure latérale du dossier, un deuxième capteur capacitif étant positionné sur une zone supérieure latérale du dossier, un troisième capteur capacitif étant positionné sur une zone latérale de la partie arrière de l'assise, un quatrième capteur capacitif étant positionné sur une zone latérale de la partie avant de l'assise, et dans lequel si la variation calculée pour le premier capteur capacitif est supérieure à 7500 pico Farads, si la variation calculée pour le deuxième capteur capacitif est supérieure à 12 000 pico Farads, si la variation calculée pour le troisième capteur capacitif est inférieure à -3500 pico Farads, et si la variation calculée pour le quatrième capteur capacitif, est inférieure à 3000 pico Farads, le signal de détection est représentatif d'une rotation du thorax de l'occupant.

Selon un mode de réalisation, le signal de détection est généré uniquement si les valeurs capacitives mesurées au cours de la deuxième période stationnaire sont comprises entre le seuil minimal et le seuil maximal pendant une durée d'au moins trois secondes.

Selon un mode de réalisation, le procédé comporte en outre une étape d'avertissement de l'occupant du siège par le déclenchement d'un son, d'un affichage ou une génération d'une vibration.

Selon un mode de réalisation, le siège comporte une assise et un dossier articulé à l'assise autour d'un axe s'étendant selon une direction transversale, et dans lequel le mouvement du tronc de l'occupant est un mouvement de rotation autour d'un axe parallèle à l'axe transversal.

Selon un mode de réalisation, le signal de détection généré est représentatif d'au moins une position de l'occupant parmi une rotation d'une partie du tronc de l'occupant, une rotation du thorax de l'occupant et une rotation du bassin de l'occupant, et dans lequel le procédé comporte en outre une étape de transmission du signal de détection à un dispositif de gestion du déclenchement d'un coussin gonflable de sécurité, ledit dispositif de gestion étant propre à gérer le déclenchement du coussin gonflable en fonction de la position de l'occupant.

### Brève description des figures

[Fig. 1] est une vue schématique de côté d'un squelette humain dans une posture ergonomique ;
[Fig. 2] est une vue schématique de côté d'un squelette humain dans une posture dans laquelle le bassin est pivoté vers l'arrière ;
[Fig. 3] est une vue schématique de côté d'un squelette humain dans une posture dans laquelle le thorax est pivoté vers l'avant ;
[Fig. 4] est une vue schématique d'un exemple d'un système de détection apte à mettre en oeuvre le procédé selon la présente invention ;
[Fig. 5] est une vue schématique représentant un exemple de bloc-diagramme du contrôleur du système de détection illustré sur la figure 4 ;

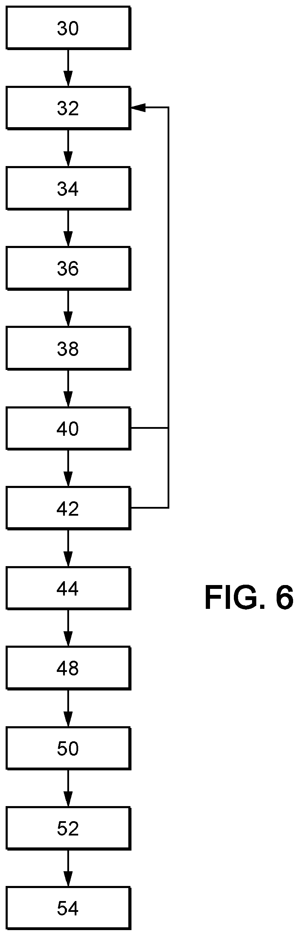

[Fig. 6] est un organigramme des étapes du procédé de détection selon la présente invention.

### Description détaillée de l'invention

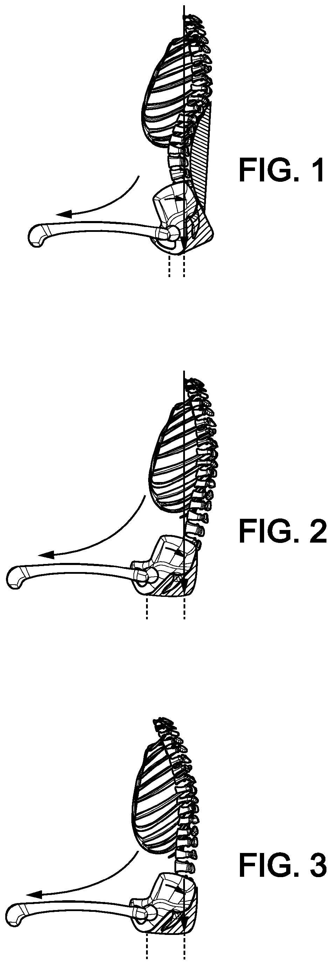

La figure 1 représente un squelette humain d'une personne assise dans une posture ergonomique qui n'engendre pas de douleurs lombaires. La figure 2 représente un squelette humain d'une personne assise dans une posture dans laquelle son bassin est pivoté vers l'arrière. Cette posture est inadaptée et peut engendrer des douleurs lombaires. De même, la figure 3 représente un squelette humain d'une personne assise dans une posture dans laquelle son thorax est pivoté vers l'avant. Cette posture est également inadaptée et peut engendrer des douleurs lombaires.

Le procédé de détection selon la présente divulgation est propre à détecter la rotation d'une partie du tronc d'une personne assise sur un siège du système de détection 2. Le tronc d'une personne comprend le thorax, l'abdomen et le bassin aussi appelé pelvis.

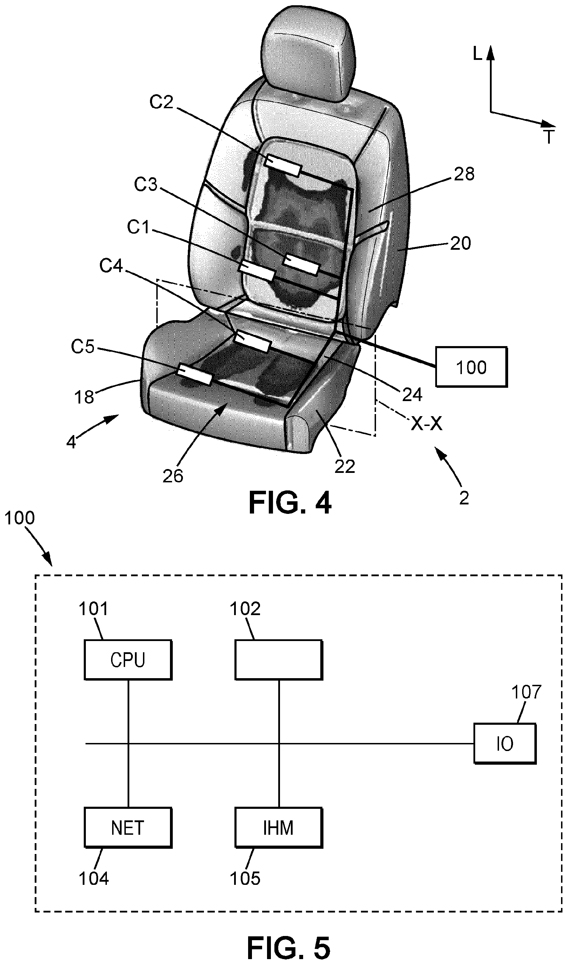

En référence à la figure 4, le système de détection 2 selon la présente divulgation comporte un siège 4 d'un véhicule, cinq capteurs capacitifs interdigités C1, C2, C3, C4, C5 portés par le siège, et un contrôleur 100 connecté électriquement aux capteurs capacitifs interdigités.

Le véhicule peut par exemple être un véhicule automobile, un train, un avion ou un bateau.

Le siège 4 comporte une assise 18 et un dossier 20 articulé à l'assise autour d'un axe s'étendant selon une direction transversale T.

En particulier, l'assise 18 comprend une face de réception 22 destinée à accueillir une personne ou un objet. Pour les besoins de cette description, on dit que la face de réception de l'assise est partagée par un plan central transverse X-X en une zone adjacente au dossier, dite « partie arrière » 24, et en une zone située du côté opposé au dossier, dite « partie avant » 26.

Le dossier 20 comprend également une face de réception 28 propre à accueillir le dos d'une personne humaine. Le dossier s'étendant selon une direction longitudinale L et selon une direction transversale T. Dans la présente divulgation, le dossier, et en particulier la face de réception 28 du dossier, porte trois capteurs capacitifs interdigités du système de détection. La figure 4 montre un exemple avantageux de positionnement des capteurs capacitifs interdigités. Ce positionnement a été choisi en tenant compte des zones d'appui d'une personne humaine assise sur le siège.

Un capteur capacitif interdigité C1 est situé sur une zone inférieure et latérale du dossier. Le capteur capacitif interdigité C1 est situé à un emplacement de la face de réception du dossier qui correspond à une zone d'appui des moyens fessiers de cette personne. Un capteur capacitif interdigité C2 est disposé sur une zone supérieure et latérale du dossier. Ainsi, ce capteur capacitif interdigité C2 est situé à un emplacement du dossier qui correspond à une zone d'appui d'une omoplate de la personne assise sur le siège et adossée au dossier.

Un capteur capacitif interdigité C3 est situé sur une zone inférieure ou centrale selon la direction longitudinale L, et centrale selon la direction transversale T. Ce capteur capacitif interdigité C3 est situé à un emplacement du dossier qui correspond à une zone d'appui des vertèbres lombaires de cette personne.

Le capteur capacitif interdigité C3 est situé verticalement entre le capteur capacitif interdigité C2 et le capteur capacitif interdigité C1. Le capteur capacitif interdigité C3 est toujours situé en dessous du capteur interdigité C2.

L'assise porte deux capteurs capacitifs interdigités du système de détection.

Un capteur capacitif interdigité C4 est situé sur une zone latérale de la partie arrière 24 de l'assise. Le capteur capacitif interdigité C4 est situé à un emplacement de la face de réception de l'assise qui correspond à une zone d'appui d'une fesse de la personne assise sur le siège et adossée au dossier.

Un capteur capacitif interdigité C5 est situé sur une zone latérale de la partie avant 26 de l'assise. Le capteur capacitif interdigité C5 est située à un emplacement de l'assise qui correspond à une zone d'appui d'un ischio-jambier de cette personne. En référence à la figure 5, le contrôleur 100 du système de détermination comporte un bus de communication connecté, par exemple, à une unité centrale de traitement 101, tel qu'un processeur ou un microprocesseur, et notée CPU. Le contrôleur 100 comporte aussi une mémoire 102 et un code exécutable permettant de mettre en oeuvre le procédé de détection au moyen du siège et des capteurs capacitifs interdigités précédemment décrits.

Le contrôleur 100 peut être un appareil programmable qui utilise un logiciel, un circuit intégré spécifique (ASIC) ou une partie de l'unité de commande d'un moteur (ECU). Le contrôleur 100 peut éventuellement comprendre une interface réseau 104 qui est normalement connectée à un réseau de communication sur lequel des données numériques à traiter sont transmises ou reçues ; une interface utilisateur 105 pour recevoir des entrées d'un utilisateur ou pour afficher des informations à un utilisateur, un module d'entrée-sortie 107, noté IO, pour la réception, l'envoi de données depuis ou vers des périphériques externes tels que disque dur, support de stockage amovible ou autres.

La mémoire 102 comporte des plages de variation de valeurs capacitives définie pour des ensembles de capteurs capacitifs et permettant une détection de la rotation d'une partie du tronc d'un occupant assis sur un siège

Ainsi, par exemple, un ensemble comporte le capteur capacitif C3 associé à une première plage de variation supérieure à 7500 pico Farads et le capteur capacitif C4 associé à une première plage de variation supérieure à 6000 pico Farads. Cet ensemble de capteurs capacitifs C3, C4 et ces premières plages de variation permettent la détection d'une rotation du bassin de l'occupant telle qu'illustré sur la figure 2 et comme explicité ultérieurement dans la description du procédé.

Un autre ensemble comporte le capteur capacitif C1 associé à une deuxième plage de variation supérieure à 4500 pico Farad ou compris entre -3000 pico Farads et +3000 pico Farads, le capteur capacitif C3 associé à une deuxième plage de variation supérieure à 7500 pico Farads et le capteur capacitif C4 associé à une deuxième plage de variation supérieure à 4500 pico Farads.

Cet ensemble de capteurs capacitifs C1, C3, C4 et ces deuxièmes plages de variation permettent également la détection d'une rotation du bassin de l'occupant. Le tableau ci-dessous reprend les capteurs capacitifs et les plages de variation de valeurs capacitives permettant la détection d'une rotation du bassin vers l'arrière.

**Tableau 1**

| Capteur capacitif | Première plage de variation de valeurs capacitives | Deuxième plage de variation de valeurs capacitives |
|---|---|---|
| C1 | - | Supérieure à 4500 pF ou compris entre -3000 pF et +3000 pF |
| C3 | Supérieure à 7500 pF | Supérieure à 7500 pF |
| C4 | Supérieure à 6000 pF | Supérieure à 4500 pF |

Selon un autre exemple, un ensemble comporte le capteur capacitif C1 associé à une plage de variation supérieure à 7500 pico Farads, le capteur capacitif C2 associé à une plage de variation supérieure à 12000 pico Farads, le capteur capacitif C4 associé à une plage de variation inférieure à - 3500 pico Farads, le capteur capacitif C5 associé à une plage de variation inférieure à 3 000 pico Farads. Cet ensemble de capteurs capacitifs C1, C2, C4 et C5 et ces plages de variation permettent la détection d'une rotation du bassin de l'occupant telle qu'illustré sur la figure 3 et comme explicité ultérieurement dans la description du procédé.

**Tableau 2**

| Capteur capacitif | Plage de variation de valeurs capacitives |
|---|---|
| C1 | Supérieur à 7 500 pF |
| C2 | Supérieur à 12 000 pF |
| C4 | Inférieur à - 3500 pF |
| C5 | Inférieur à 3000 pF |

Le procédé de détection d'une rotation d'au moins une partie du tronc d'un occupant assis sur un siège débute par une étape de déclenchement 30 d'une phase de mesure de valeurs capacitives par les capteurs capacitifs C1 à C5. La phase de mesure dure pendant toute la durée du procédé de détection. La phase de mesure comporte des périodes de mesure. Au cours de chaque période de mesure, les capteurs capacitifs C1 à C5 mesurent plusieurs valeurs capacitives. Le procédé comporte des étapes de traitement des valeurs capacitives mesurées dans chaque période de mesure afin de déterminer une première posture stationnaire de l'occupant assis sur le siège, une modification de la position de l'occupant pour se mettre dans une position pouvant entrainer une douleur dans son dos, et une nouvelle position immobile appelée deuxième posture stationnaire.

A cet effet, au cours d'une étape 32, une valeur moyenne est calculée à partir des valeurs capacitives mesurées pour chaque capteur capacitif, au cours d'une période dite période précédente.

Puis, au cours d'une étape 34, un seuil minimal et un seuil maximal sont calculés pour chaque capteur capacitif. Le seuil minimal est calculé en retranchant 3 000 pico Farads à la valeur moyenne calculée pour chaque capteur capacitif au cours de l'étape 32. Un seuil maximal est calculé en ajoutant 3 000 pico Farads à la valeur moyenne calculée pour chaque capteur capacitif au cours de l'étape 32.

Au cours d'une étape 36, les valeurs capacitives mesurées au cours d'une ou plusieurs périodes suivantes sont comparées au seuil minimal et au seuil maximal, pour chaque capteur capacitif.

Lorsque les valeurs capacitives mesurées au cours de la ou des périodes suivantes pour l'ensemble des capteurs capacitifs sont comprises entre le seuil minimal et le seuil maximal pendant une durée au moins égale à 1, 5 secondes alors une première posture stationnaire est déterminée au cours d'une étape 38. Cette posture stationnaire correspond à une immobilité du tronc et des isojambiers de l'occupant assis sur le siège. La période au cours de laquelle la première posture stationnaire est déterminée est appelée première période stationnaire dans cette demande de brevet.

La phase de mesure des valeurs capacitives se poursuit afin de déterminer si l'occupant du siège modifie sa position pour se mettre dans une position pouvant entrainer une douleur dans son dos. Les étapes de traitement 32 à 36 sont répétées jusqu'à ce qu'un mouvement du tronc de l'occupant soit déterminé au cours d'une étape 40. Un mouvement du tronc de l'occupant est déterminé lorsque les valeurs capacitives mesurées au cours d'une ou de plusieurs périodes suivantes sont supérieures ou inférieures à 4000 pico Farads pendant une durée de au moins 3 secondes. Le mouvement du tronc de l'occupant est un mouvement de rotation autour d'un axe parallèle à l'axe transversal T.

Enfin, les étapes 32 à 36 sont répétées jusqu'à ce qu'une deuxième posture stationnaire de l'occupant soit déterminée au cours d'une étape 42. La période au cours de laquelle la deuxième posture stationnaire est déterminée est appelée deuxième période stationnaire dans cette demande de brevet.

Au cours d'une étape 44, une valeur représentative des valeurs capacitives mesurées au cours de la première période stationnaire est déterminée pour chaque capteur capacitif. Une valeur représentative des valeurs capacitives mesurées au cours de la deuxième période stationnaire est également déterminée pour chaque capteur capacitif. Ces valeurs représentatives sont par exemple les valeurs moyennes des valeurs capacitives mesurées au cours de chaque période stationnaire.

De préférence, le signal de détection est généré au cours d'une étape 50, uniquement si les valeurs capacitives mesurées au cours de la deuxième période stationnaire sont comprises entre le seuil maximal et le seuil minimal pendant une durée d'au moins dix secondes.

Au cours d'une étape 46, la variation entre la moyenne des valeurs capacitives mesurées au cours de la première période stationnaire, et la valeur moyenne des valeurs capacitives mesurées au cours de la deuxième période stationnaire, est calculée pour les capteurs capacitifs C1, C3 et C4.

Au cours d'une étape 48, les variations calculées pour les capteurs capacitifs C1, C3 et C4 sont comparées aux premières et aux deuxièmes plages de valeurs capacitives enregistrées dans la mémoire 102 et indiquées dans le tableau 1.

Un signal de détection d'une rotation du bassin est généré au cours de l'étape 50 si les conditions cumulatives ci -dessous sont remplies :
- si la variation calculée pour le capteur capacitif C3 est supérieure à 7500 pico Farads, et
- si la variation calculée pour le capteur capacitif C4 est supérieure à 6000 pico Farads.

Un signal de détection d'une rotation du bassin est également généré au cours de l'étape 50 si les conditions cumulatives ci -dessous sont remplies :
- si la variation calculée pour le capteur capacitif C1 est supérieure à 4500 pico Farads ou si la variation calculée pour le capteur capacitif C1 est comprise entre - 3000 pico Farads et +3 000 pico Farads, et
- si la variation calculée pour le capteur capacitif C3 est supérieure à 7500 pico Farads et,
- si la variation calculée pour le capteur capacitif C4 est supérieure à 4500 pico Farads.

Au cours de l'étape 46, la variation entre la moyenne des valeurs capacitives mesurées au cours de la première période stationnaire, et la valeur moyenne des valeurs capacitives mesurées au cours de la deuxième période stationnaire, est calculée pour les capteurs capacitifs C1, C2, C4 et C5.

Au cours de l'étape 48, les variations calculées pour les capteurs capacitifs C1, C2, C4 et C5 sont comparées aux plages de valeurs capacitives enregistrées dans la mémoire 102 et indiquées dans le tableau 2.

Un signal de détection d'une rotation du thorax est généré au cours d'une étape 52 si les conditions cumulatives ci -dessous sont remplies :
- si la variation calculée pour le premier capteur capacitif C1 est supérieure à 7500 pico Farads, et
- si la variation calculée pour le deuxième capteur capacitif C2 est supérieure à 12 000 pico Farads, et
- si la variation calculée pour le troisième capteur capacitif C4 est inférieure à -3500 pico Farads, et
- si la variation calculée pour le quatrième capteur capacitif C5, est inférieure à 3000 pico Farads.

De préférence, le signal de détection d'une rotation du thorax est généré au cours de l'étape 52, uniquement si les valeurs capacitives mesurées au cours de la deuxième période stationnaire sont comprises entre le seuil minimal et le seuil maximal pendant une durée d'au moins trois secondes.

Le procédé de détection peut également comporter une étape 54 d'avertissement de l'occupant du siège par le déclenchement d'un son, d'un affichage ou une génération d'une vibration.

De préférence, le procédé comporte en outre une étape de transmission d'un signal de détection généré à un dispositif de gestion du déclenchement d'un coussin gonflable de sécurité. Ce signal est utilisé par ce dernier pour gérer le déclenchement du coussin gonflable de sécurité en fonction de la position de l'occupant. En effet, le signal de détection généré est représentatif d'au moins une position de l'occupant parmi une rotation d'une partie du tronc de l'occupant, une rotation du thorax de l'occupant et une rotation du bassin de l'occupant. Le dispositif de gestion du déclenchement du coussin gonflable de sécurité utilise cette information pour déclencher ou non le coussin gonflable ou pour décider de la force de ce déclenchement.

## Revendications

1. Procédé de détection d'une rotation d'au moins une partie du tronc d'un occupant assis sur un siège d'un véhicule, par exemple un véhicule automobile, le procédé étant mis en oeuvre par un système de détection (2) comprenant un siège (4), au moins deux capteurs capacitifs interdigités (C1 ,C2,C3,C4,C5) portés par le siège, et un contrôleur (100) connecté aux capteurs capacitifs interdigités, ledit contrôleur comprenant une mémoire (102) contenant au moins une plage de variation de valeurs capacitives définie pour au moins un capteur capacitif interdigité ; le procédé comportant une étape de déclenchement (30) d'une phase de mesure comportant des périodes au cours desquelles des valeurs capacitives sont mesurées par les capteurs capacitifs ; le procédé comportant en outre les étapes suivantes mises en oeuvre par le contrôleur au cours de la phase de mesure :
- déterminer (32,34,36,38,40,42) à partir des valeurs capacitives mesurées, successivement, une première posture stationnaire de l'occupant au cours d'une première période stationnaire, un mouvement d'au moins une partie du tronc de l'occupant, et une deuxième posture stationnaire de l'occupant au cours d'une deuxième période stationnaire,
- calculer (44, 46) pour chaque capteur capacitif (C1, C3, C4), la variation entre une valeur représentative des valeurs capacitives mesurées au cours de la première période stationnaire et une valeur représentative des valeurs capacitives mesurées au cours de la deuxième période stationnaire,
- si la variation calculée pour lesdits au moins deux capteurs capacitifs, est comprise dans lesdites plages de valeurs capacitives définies pour lesdits capteurs capacitifs, générer (50) un signal de détection.

2. Procédé de détection selon la revendication 1, dans lequel la valeur représentative des valeurs capacitives mesurées est la valeur moyenne des valeurs capacitives mesurées.

3. Procédé de détection selon la revendication 1, dans lequel l'étape de détermination d'une posture stationnaire comporte les étapes suivantes :
- pour chaque capteur capacitif, calculer (34) un seuil maximal et un seuil minimal à partir des valeurs capacitives mesurées au cours d'une période précédente,
- pour chaque capteur capacitif, comparer (36) les valeurs capacitives mesurées au cours d'une période suivante au seuil maximal et au seuil minimal; si lesdites valeurs capacitives sont comprises entre le seuil maximal et le seuil minimal pour l'ensemble des capteurs capacitifs, pendant une durée supérieure à une seconde et demi alors une posture stationnaire est déterminée.

4. Procédé de détection selon la revendication 3, dans lequel l'étape de détermination comporte une étape de calcul (32) de la moyenne des valeurs capacitives mesurées au cours de la période précédente pour chaque capteur capacitif ; le seuil maximal et/ou le seuil minimal étant calculée par ajout et/ou retranchement d'au moins 2500 pico Farads, et de préférence de 3 000 pico Farads, à la valeur moyenne calculées à partir des valeurs capacitives mesurées au cours de la période précédente.

5. Procédé de détection selon l'une quelconque des revendications 1 à 4, dans lequel la deuxième période stationnaire a lieu au moins deux minutes, et de préférence trois minutes, après la première période stationnaire.

6. Procédé de détection selon l'une quelconque des revendications 1 à 5, dans lequel le siège (4) comporte un dossier (20) s'étendant selon une direction longitudinale et selon une direction transversale, et une assise (18) ayant une partie arrière (24) adjacente au dossier ; un premier capteur capacitif (C3) étant positionné sur une zone centrale selon la direction transversale du dossier, un deuxième capteur capacitif (C4) étant positionné sur une zone latérale de la partie arrière (24) de l'assise, et dans lequel si la variation calculée pour le premier capteur capacitif (C3) est supérieure à 7500 pico Farads, et si la variation calculée pour le deuxième capteur capacitif (C4), est supérieure à 7500 pico Farads, le signal de détection est représentatif d'une rotation du bassin de l'occupant.

7. Procédé de détection selon l'une quelconque des revendications 1 à 5, dans lequel le siège (4) comporte un dossier (20) s'étendant selon une direction longitudinale et selon une direction transversale et une assise (18) ayant une partie arrière (24) adjacente au dossier, un premier capteur capacitif (C1) étant positionné sur une zone inférieure latérale du dossier, un deuxième capteur capacitif (C3) étant positionné sur une zone centrale selon la direction transversale du dossier, un troisième capteur capacitif (C4) étant positionné sur une zone latérale de la partie arrière (24) de l'assise, et dans lequel si la variation calculée pour le premier capteur capacitif (C1) est supérieure à 4500 pico Farads ou est comprise entre -3000 pico Farads et +3000 pico Farads, si la variation calculée pour le deuxième capteur capacitif (C3) est supérieure à 7500 pico Farads, et si la variation calculée pour le troisième capteur capacitif (C4) est comprise entre -3000 pico Farads et +3000 pico Farads, le signal de détection est représentatif d'une rotation du bassin de l'occupant.

8. Procédé de détection selon l'une quelconque des revendications 5 et 6, dans lequel le signal de détection est généré uniquement si les valeurs capacitives mesurées au cours de la deuxième période stationnaire sont comprises entre le seuil maximal et le seuil minimal pendant une durée d'au moins dix secondes.

9. Procédé de détection selon l'une quelconque des revendications 2 à 4, dans lequel le siège (4) comporte un dossier (20) et une assise (18) ayant une partie arrière (24) adjacente au dossier et une partie avant (26), un premier capteur capacitif (C1) étant positionné sur une zone inférieure latérale du dossier, un deuxième capteur capacitif (C2) étant positionné sur une zone supérieure latérale du dossier, un troisième capteur capacitif (C4) étant positionné sur une zone latérale de la partie arrière (24) de l'assise, un quatrième capteur capacitif (C5) étant positionné sur une zone latérale de la partie avant (26) de l'assise, et dans lequel si la variation calculée pour le premier capteur capacitif (C1) est supérieure à 7500 pico Farads, si la variation calculée pour le deuxième capteur capacitif (C2) est supérieure à 12 000 pico Farads, si la variation calculée pour le troisième capteur capacitif (C4) est inférieure à -3500 pico Farads, et si la variation calculée pour le quatrième capteur capacitif (C5), est inférieure à 3000 pico Farads, le signal de détection est représentatif d'une rotation du thorax de l'occupant.

10. Procédé de détection selon la revendication 9, dans lequel le signal de détection est généré uniquement si les valeurs capacitives mesurées au cours de la deuxième période stationnaire sont comprises entre le seuil minimal et le seuil maximal pendant une durée d'au moins trois secondes.

11. Procédé de détection selon l'une quelconques des revendication 1 à 10, qui comporte en outre une étape d'avertissement (54) de l'occupant du siège par le déclenchement d'un son, d'un affichage ou une génération d'une vibration.

12. Procédé de détection selon l'une quelconques des revendication 1 à 8, dans lequel le siège (4) comporte une assise et un dossier (20) articulé à l'assise (18) autour d'un axe s'étendant selon une direction transversale (T), et dans lequel le mouvement du tronc de l'occupant est un mouvement de rotation autour d'un axe parallèle à l'axe transversal (T).

13. Procédé de détection selon l'une quelconques des revendication 1 à 12, dans lequel le signal de détection généré est représentatif d'au moins une position de l'occupant parmi une rotation d'une partie du tronc de l'occupant, une rotation du thorax de l'occupant et une rotation du bassin de l'occupant, et dans lequel le procédé comporte en outre une étape de transmission du signal de détection à un dispositif de gestion du déclenchement d'un coussin gonflable de sécurité, ledit dispositif de gestion étant propre à gérer le déclenchement du coussin gonflable en fonction de la position de l'occupant.

## Patentansprüche

1. Verfahren zum Erfassen einer Drehung mindestens eines Teils des Oberkörpers eines Insassen, der auf einem Sitz eines Fahrzeugs sitzt, zum Beispiel eines Kraftfahrzeugs, wobei das Verfahren durch ein Erfassungssystem (2) implementiert wird, das einen Sitz (4), mindestens zwei ineinandergreifende kapazitive Sensoren (C1, C2, C3, C4, C5), die von dem Sitz getragen werden, und eine Steuerung (100) umfasst, die mit den ineinandergreifenden kapazitiven Sensoren verbunden ist, die Steuerung einen Speicher (102) umfasst, der mindestens einen Änderungsbereich von kapazitiven Werten umfasst, die für mindestens einen ineinandergreifenden kapazitiven Sensor definiert sind; wobei das Verfahren einen Schritt des Auslösens (30) einer Messphase umfasst, die Perioden umfasst, während der kapazitive Werte durch die kapazitiven Sensoren gemessen werden; wobei das Verfahren ferner die folgenden Schritte umfasst, die durch die Steuerung während der Messphase implementiert werden:
- Bestimmen (32, 34, 36, 38, 40, 42), basierend auf den gemessenen kapazitiven Werten, nacheinander, einer ersten stationären Haltung des Insassen während einer ersten stationären Periode, einer Bewegung von mindestens einem Teil des Oberkörpers des Insassen und einer zweiten stationären Haltung des Insassen während einer zweiten stationären Periode,
- Berechnen (44, 46), für jeden kapazitiven Sensor (C1, C3, C4), der Änderung zwischen einem Wert, der für die kapazitiven Werte repräsentativ ist, die während der ersten stationären Periode gemessen werden, und einem Wert, der für die kapazitiven Werte repräsentativ ist, die während der zweiten stationären Periode gemessen werden,
- wenn die für die mindestens zwei kapazitiven Sensoren berechnete Änderung in den für die kapazitiven Sensoren definierten kapazitiven Wertebereichen eingeschlossen ist, Erzeugen (50) eines Erfassungssignals.

2. Erfassungsverfahren nach Anspruch 1, wobei der Wert, der für die gemessenen kapazitiven Werte repräsentativ ist, der Durchschnittswert der gemessenen kapazitiven Werte ist.

3. Erfassungsverfahren nach Anspruch 1, wobei der Schritt des Bestimmens einer stationären Haltung die folgenden Schritte umfasst:
- für jeden kapazitiven Sensor, Berechnen (34) eines maximalen Schwellenwerts und eines minimalen Schwellenwerts aus den kapazitiven Werten, die während einer vorhergehenden Periode gemessen werden,
- für jeden kapazitiven Sensor, Vergleichen (36) der kapazitiven Werte, die während einer nächsten Periode gemessen werden, mit dem maximalen Schwellenwert und mit dem minimalen Schwellenwert; wobei, wenn die kapazitiven Werte für alle kapazitiven Sensoren für eine Dauer länger als eineinhalb Sekunden zwischen dem maximalen Schwellenwert und dem minimalen Schwellenwert liegen, eine stationäre Haltung bestimmt wird.

4. Erfassungsverfahren nach Anspruch 3, wobei der Bestimmungsschritt einen Schritt (32) zum Berechnen des Durchschnittswerts der kapazitiven Werte, gemessen während der vorhergehenden Periode, für jeden kapazitiven Sensor umfasst; der maximale Schwellenwert und/oder der minimale Schwellenwert durch Addieren und/oder Subtrahieren von mindestens 2500 Pikofarad und vorzugsweise 3000 Pikofarad berechnet wird, von dem Durchschnittswert, der aus den kapazitiven Werten berechnet wird, die während der vorhergehenden Periode gemessen werden.

5. Erfassungsverfahren nach einem der Ansprüche 1 bis 4, wobei die zweite stationäre Periode mindestens zwei Minuten und vorzugsweise drei Minuten nach der ersten stationären Periode erfolgt.

6. Erfassungsverfahren nach einem der Ansprüche 1 bis 5, wobei der Sitz (4) eine Rückenlehne (20), die sich in einer Längsrichtung und in einer Querrichtung erstreckt, und einen Sitzboden (18) umfasst, der einen hinteren Teil (24) angrenzend an die Rückenlehne aufweist, wobei ein erster kapazitiver Sensor (C3) auf einem zentralen Bereich in der Querrichtung der Rückenlehne positioniert ist, ein zweiter kapazitiver Sensor (C4) auf einem seitlichen Bereich des hinteren Teils (24) des Sitzbodens positioniert ist, und wobei, wenn die berechnete Änderung für den ersten kapazitiven Sensor (C3) größer als 7500 Pikofarad ist, und wenn die berechnete Änderung für den zweiten kapazitiven Sensor (C4) größer als 7500 Pikofarad ist, das Erfassungssignal repräsentativ für eine Drehung des Beckens des Insassen ist.

7. Erfassungsverfahren nach einem der Ansprüche 1 bis 5, wobei der Sitz (4) eine Rückenlehne (20), die sich in einer Längsrichtung und in einer Querrichtung erstreckt, und einen Sitzboden (18) umfasst, der einen hinteren Teil (24) angrenzend an die Rückenlehne aufweist, wobei ein erster kapazitiver Sensor (C1) an einem unteren seitlichen Bereich der Rückenlehne positioniert ist, ein zweiter kapazitiver Sensor (C3) an einem zentralen Bereich in der Querrichtung der Rückenlehne positioniert ist, ein dritter kapazitiver Sensor (C4) an einem seitlichen Bereich des hinteren Teils (24) des Sitzbodens positioniert ist, und wobei, wenn die berechnete Änderung für den ersten kapazitiven Sensor (C1) größer als 4500 Pikofarad oder zwischen -3000 Pikofarad und +3000 Pikofarad ist, wenn die berechnete Änderung für den zweiten kapazitiven Sensor (C3) größer als 7500 Pikofarad ist, und wenn die berechnete Änderung für den dritten kapazitiven Sensor (C4) zwischen -3000 Pikofarad und +3000 Pikofarad ist, das Erfassungssignal repräsentativ für eine Drehung des Beckens des Insassen ist.

8. Erfassungsverfahren nach einem der Ansprüche 5 und 6, wobei das Erfassungssignal nur dann erzeugt wird, wenn die während der zweiten stationären Periode gemessenen kapazitiven Werte für eine Dauer von mindestens zehn Sekunden zwischen dem maximalen Schwellenwert und dem minimalen Schwellenwert liegen.

9. Erfassungsverfahren nach einem der Ansprüche 2 bis 4, wobei der Sitz (4) eine Rückenlehne (20) und einen Sitzboden (18) umfasst, der einen hinteren Teil (24) angrenzend an die Rückenlehne und einen Vorderteil (26) aufweist, wobei ein erster kapazitiver Sensor (C1) an einem unteren seitlichen Bereich der Rückenlehne positioniert ist, ein zweiter kapazitiver Sensor (C2) an einem seitlichen oberen Bereich der Rückenlehne positioniert ist, ein dritter kapazitiver Sensor (C4) an einem seitlichen Bereich des hinteren Teils (24) des Sitzbodens positioniert ist, ein vierter kapazitiver Sensor (C5) an einem seitlichen Bereich des Vorderteils (26) des Sitzbodens positioniert ist, und wobei, wenn die für den ersten kapazitiven Sensor (C1) berechnete Änderung größer als 7500 Pikofarad ist, wenn die für den zweiten kapazitiven Sensor (C2) berechnete Änderung größer als 12000 Pikofarad ist, wenn die für den dritten kapazitiven Sensor (C4) berechnete Änderung kleiner als -3500 Pikofarad ist, und wenn die für den vierten kapazitiven Sensor (C5) berechnete Änderung kleiner als 3000 Pikofarad ist, das Erfassungssignal repräsentativ für eine Drehung des Brustkorbs des Insassen ist.

10. Erfassungsverfahren nach Anspruch 9, wobei das Erfassungssignal nur dann erzeugt wird, wenn die während der zweiten stationären Periode gemessenen kapazitiven Werte für eine Dauer von mindestens drei Sekunden zwischen dem minimalen Schwellenwert und dem maximalen Schwellenwert liegen.

11. Erfassungsverfahren nach einem der Ansprüche 1 bis 10, das ferner einen Schritt (54) zum Warnen des Insassen des Sitzes durch Auslösen eines Tons, einer Anzeige oder der Erzeugung einer Vibration umfasst.

12. Erfassungsverfahren nach einem der Ansprüche 1 bis 8, wobei der Sitz (4) einen Sitzboden und eine Rückenlehne (20) umfasst, die an dem Sitzboden (18) um eine Achse angelenkt ist, die sich entlang einer Querrichtung (T) erstreckt, und wobei die Bewegung des Oberkörpers des Insassen eine Drehbewegung um eine Achse ist, die parallel zu der Querachse (T) ist.

13. Erfassungsverfahren nach einem der Ansprüche 1 bis 12, wobei das erzeugte Erfassungssignal für mindestens eine Position des Insassen unter einer Drehung eines Teils des Oberkörpers des Insassen, einer Drehung des Brustkorbs des Insassen und einer Drehung des Beckens des Insassen repräsentativ ist, und wobei das Verfahren ferner einen Schritt des Übertragens des Erfassungssignals an eine Vorrichtung zum Verwalten des Auslösens eines Airbags umfasst, wobei die Verwaltungsvorrichtung in der Lage ist, die Auslösung des Airbags basierend auf der Position des Insassen zu verwalten.

## Claims

1. A method for detecting a rotation of at least part of the torso of an occupant seated on a seat of a vehicle, for example a motor vehicle, the method being implemented by a detection system (2) comprising a seat (4), at least two interdigitated capacitive sensors (C1, C2, C3, C4, C5) carried by the seat, and a controller (100) connected to the interdigitated capacitive sensors, said controller comprising a memory (102) containing at least one variation range of capacitive values defined for at least one interdigitated capacitive sensor; the method comprising a step of triggering (30) a measurement phase comprising periods during which capacitive values are measured by the capacitive sensors; the method further comprising the following steps implemented by the controller during the measurement phase:
- determining (32, 34, 36, 38, 40, 42), from the capacitive values measured, successively, a first stationary posture of the occupant during a first stationary period, a movement of at least a part of the occupant's torso, and a second stationary posture of the occupant during a second stationary period,
- calculating (44, 46), for each capacitive sensor (C1, C3, C4), the variation between a value representative of the capacitive values measured during the first stationary period and a value representative of the capacitive values measured during the second stationary period,
- if the variation calculated for said at least two capacitive sensors is comprised in said capacitive values ranges defined for said capacitive sensors, generating (50) a detection signal.

2. The detection method according to claim 1, wherein the value representative of the measured capacitive values is the average value of the measured capacitive values.

3. The detection method according to claim 1, wherein the step of determining a stationary posture comprises the following steps:
- for each capacitive sensor, calculating (34) a maximum threshold and a minimum threshold from the capacitive values measured during a preceding period,
- for each capacitive sensor, comparing (36) the capacitive values measured during a next period to the maximum threshold and to the minimum threshold; if said capacitive values are between the maximum threshold and the minimum threshold for all of the capacitive sensors for a duration greater than a second and a half, then a stationary posture is determined.

4. The detection method according to claim 3, wherein the determination step comprises a step (32) of computing the average of the capacitive values measured during the preceding period for each capacitive sensor; the maximum threshold and/or the minimum threshold being calculated by adding and/or subtracting at least 2500 pico Farads, and preferably 3000 pico Farads, from the average value calculated from the capacitive values measured during the preceding period.

5. The detection method according to any one of claims 1 to 4, wherein the second stationary period takes place at least two minutes, and preferably three minutes, after the first stationary period.

6. The detection method according to any one of claims 1 to 5, wherein the seat (4) comprises a backrest (20) extending in a longitudinal direction and in a transverse direction, and a seat bottom (18) having a rear part (24) adjacent to the backrest, a first capacitive sensor (C3) being positioned on a central area in the transverse direction of the backrest, a second capacitive sensor (C4) being positioned on a lateral area of the rear part (24) of the seat bottom, and wherein if the calculated variation for the first capacitive sensor (C3) is greater than 7500 pico Farads, and if the calculated variation for the second capacitive sensor (C4) is greater than 7500 pico Farads, the detection signal is representative of a rotation of the occupant's pelvis.

7. The detection method according to any one of claims 1 to 5, wherein the seat (4) comprises a backrest (20) extending in a longitudinal direction and in a transverse direction, and a seat bottom (18) having a rear part (24) adjacent to the backrest, a first capacitive sensor (C1) being positioned on a lower lateral area of the backrest, a second capacitive sensor (C3) being positioned on a central area in the transverse direction of the backrest, a third capacitive sensor (C4) being positioned on a lateral area of the rear part (24) of the seat bottom, and wherein if the calculated variation for the first capacitive sensor (C1) is greater than 4500 pico Farads or is between -3000 pico Farads and +3000 pico Farads, if the calculated variation for the second capacitive sensor (C3) is greater than 7500 pico Farads, and if the calculated variation for the third capacitive sensor (C4) is between -3000 pico Farads and +3000 pico Farads, the detection signal is representative of a rotation of the occupant's pelvis.

8. The detection method according to any one of claims 5 and 6, wherein the detection signal is generated only if the capacitive values measured during the second stationary period are between the maximum threshold and the minimum threshold for a duration of at least ten seconds.

9. The detection method according to any one of claims 2 to 4, wherein the seat (4) comprises a backrest (20) and a seat bottom (18) having a rear part (24) adjacent to the backrest and a front part (26), a first capacitive sensor (C1) being positioned on a lower lateral area of the backrest, a second capacitive sensor (C2) being positioned on a lateral upper area of the backrest, a third capacitive sensor (C4) being positioned on a lateral area of the rear part (24) of the seat bottom, a fourth capacitive sensor (C5) being positioned on a lateral area of the front part (26) of the seat bottom, and wherein if the calculated variation for the capacitive sensor (C1) is greater than 7500 pico Farads, if the variation calculated for the second capacitive sensor (C2) is greater than 12,000 pico Farads, if the variation calculated for the third capacitive sensor (C4) is less than -3500 pico Farads, and if the variation calculated for the fourth capacitive sensor (C5) is less than 3000 pico Farads, the detection signal is representative of a rotation of the occupant's thorax.

10. The detection method according to claim 9, wherein the detection signal is generated only if the capacitive values measured during the second stationary period are between the minimum threshold and the maximum threshold for a duration of at least three seconds.

11. The detection method according to any one of claims 1 to 10, which further comprises a step (54) of warning the occupant of the seat by triggering a sound, a display or a generation of a vibration.

12. The detection method according to any one of claims 1 to 8, wherein the seat (4) comprises a seat bottom and a backrest (20) articulated to the seat bottom (18) about an axis extending along a transverse direction (T), and wherein the movement of the occupant's torso is a rotational movement about an axis parallel to the transverse axis (T).

13. The detection method according to any one of claims 1 to 12, wherein the generated detection signal is representative of at least one position of the occupant among a rotation of a part of the occupant's torso, a rotation of the occupant's thorax and a rotation of the occupant's pelvis, and wherein the method further comprises a step of transmitting the detection signal to a device for managing the triggering of an airbag, said management device being able to manage the triggering of the airbag based on the position of the occupant.
